# EUROPEAN PATENT APPLICATION

(11) **EP 4 184 407 A1**
(43) Date of publication of application: **24.05.2023**
(21) Application number: 21208796.9
(22) Date of filing: 17.11.2021
(51) Int. Cl.: G06Q 20/22, G06Q 20/38, G06Q 20/40

(54) **ACCOUNT LINKING INDEX STRUCTURE IN A NETWORK**

(71) Applicant: Mastercard International Incorporated, Purchase NY 10577 (US)
(72) Inventor: NOË, James Christian, West Wickham, BR4 0BL (GB); HAMDAN, Husham, Croydon, CR0 5BP (GB)
(74) Representative: Gill Jennings & Every LLP

(57) **Abstract**

A computer-implemented method is disclosed for constructing an index structure in a real-time payment network, comprising: receiving a first set of transaction information comprising data field entries relating to a user; creating a data record in the index structure for the user, the data record comprising a plurality of data fields for data field entries; inserting the data field entries in the first set of transaction information into the data record; receiving a second set of transaction information comprising data field entries; determining if the second set of transaction information is associated with the user, wherein at least one data field entry in the second set of transaction information is different to a corresponding data field entry in the first set of transaction information; and inserting the data field entries in the second set of transaction information into the data record if the second set of transaction information is determined to be associated with the user.

## Description

### FIELD OF INVENTION

This invention relates generally to data monitoring and security, and specifically to the determination of a security threat in a network based on linked accounts within an index structure.

### BACKGROUND

Computer networks often experience a large volume of network events. For example, a payment network enabling transfer of electronic funds can experience hundreds of thousands, millions or even tens of millions of network events per day in the form of individual transactions that each comprise electronic message(s) transmitted over the network. On average, something of the order of one, ten, or one hundred network events per day are associated with a network security threat. It is very difficult to effectively police such a large volume of network events to accurately pick out the small fraction that have a high probability of being associated with a network security threat for further investigation.

Each network event that is flagged as potentially being associated with a security threat must be examined in greater detail to ascertain whether the network event is indeed associated with a security threat or is instead a false positive. It is therefore desirable to make the detection process as accurate as possible, as each network event that is flagged as possibly being associated with a security threat that turns out to be a false positive constitutes a waste of resources such as processor cycles, power and memory. Equally, each network event that is in fact associated with a security threat that is missed constitutes an undetected security breach, which is clearly undesirable.

Furthermore networks may involve multiple parties with many different connections between the entities in the network. When a security threat occurs it may be desirable to determine which network entities have received the data associated with the security threat and from where it has originated.

This is particularly an issue in fraudulent activities as it will typically only be identified that a security threat or breach has occurred a period of time after the security threat actually took place. This means that in a short period of time the affected data may pass between numerous entities in the network. This makes it difficult to trace the path of the data has taken. Even in networks involving a small number of parties it can become difficult to trace the movement of the data from one entity to another.

Due to security and privacy concerns, payment networks retain as little data as possible. Personally identifiable information ("Pll") associated with payment card account numbers or primary account numbers ("PAN"), such as accountholder date of birth, social security number, or even name, are often walled-off from payment networks in order to comply with applicable laws, privacy practices, security policies, etc. Thus, although an individual may be associated with several payment cards - and therefore several unique PANs - the payment network typically does not retain Pll that would be necessary to cross-reference each of the PANs with the individual. As a result, an issuer of PAN "A" (e.g., a payment card) is not apprised of transactions initiated by the individual associated with PAN "A" when he or she uses PAN "B" (e.g., another payment card) issued by a separate issuer. As each PAN is unique - and the necessary PII is not available - the payment network may be unable to cross-reference PAN "A" with PAN "B." At times, however, it may beneficial if the payment network were able to apprise the issuer of PAN "A" of certain details of transactions initiated by the individual using PAN "B." That is, it is difficult to pick out separate network events that are in fact associated with one another in that they relate to actions taken by a single user (e.g. a particular consumer). This information can be useful in detecting and possibly also preventing network events associated with security threats as it can allow a given entity such as an issuer to gain a better and more complete picture of typical or characteristic network behaviour on a user by user basis. With this more complete picture it can be easier to pick out network events that are a potential security risk as these tend to deviate from typical or characteristic network behaviour.

This principle can be seen in the financial context as follows. Most issuers implement processing rules that are designed to prevent transaction fraud. This is especially common with respect to out-of-state or out-of-country purchases (e.g., transactions originating from location "A" using a PAN associated with location "B," which may be out-of-state or in another country with respect to location "A"). In this case the typical or characteristic pattern of network events associated with the user is that approximately the same geographical location is associated with the point of origin of all of the network events. A network event associated with that user but having a different geographical location at its point of origin is a deviation from the usual network event pattern that may be an indication of a security threat.

While this works in principle, clearly the ability to identify outliers successfully depends on the ability to accurately define the network event pattern that constitutes 'normal' or characteristic behaviour.

Fraud prevention rules can operate based on detection of network events, and particularly detection of network events that are unusual or exceptional in some way. Such rules are beneficial to accountholders and issuers, but they can cause processing delays and unnecessary network traffic when they are applied in error. Considering the geographical location attribute of a network event, fraud prevention logic may be applied in error as follows. Assume an individual books travel accommodations for location "A" (e.g., a flight/train/bus ticket to location "A," a hotel at location "A," etc.) with PAN "A" issued by issuer "A." Once the individual arrives at location "A," he or she may then initiate a transaction using PAN "B" issued by issuer "B." Since issuer "B" was not apprised of the individual's travel to location "A" (e.g., the payment network may not have the necessary PII to cross-reference PAN "A" with PAN "B"), fraud prevention rules implemented by issuer "B" may unnecessarily cause processing delays and unnecessary network traffic for the payment network (e.g., blocking, delaying, or declining transactions that are falsely determined to be fraudulent). This may mean a delay in processing the transaction (e.g., transaction data for the transaction is stored at the payment network until issuer "B" determines whether the transaction is not fraudulent and should be approved or it is fraudulent and should be declined). This may also mean the transaction is immediately declined by issuer "B" (e.g., the payment network receives the transaction data, processes it, and soon thereafter receives a message indicative of a rejection by the merchant or acquirer bank). In the first scenario, the payment network may be burdened with storing the transaction data until such a time the transaction is approved or declined. This may lead to excess and unnecessary memory usage as well as decreased bandwidth while issuer "B" is making its determination (e.g., payment network databases would be holding/storing transaction data for a transaction that is not actually fraudulent). In the second scenario, the payment network may be burdened by the need to process a second, identical transaction at a later time (e.g., after the individual contacts issuer "B" and informs them of the travel). This causes excess network traffic and dedication of resources at the payment network (e.g., the second transaction only occurs due to the first transaction falsely determined to be fraudulent). This error essentially occurred because issuer "B" did not have sufficient information to build a complete picture of the network events associated with the individual.

In known security monitoring processes in a payment network scheme, threat detection is based on PAN associated with a payment card. For example, when a card is used to perform a transaction, the transaction is checked to determine if it fits with the transaction behaviour associated with the payment card. If the transaction fits with the expected behaviour, it is approved by an issuer on-behalf service or an authorisation request is sent to the issuer with a transaction score to indicate that the transaction is unlikely to be fraudulent. However if the transaction is deemed unusual, the transaction is either declined by the issuer on-behalf service, or an authorisation request is sent to the issuer with a transaction score that indicates that the transaction could be fraudulent. In known e-commerce systems the authorisation request sent to the issuer may result in the issuer contacting a consumer or user, via a SMS message, or mobile banking app for example, to confirm whether they are performing the transaction.

A problem with the known techniques is that they focus only around a PAN and associated payment cards (i.e. a "PAN-centric" approach), such that transaction behaviour of a single user cannot be accurately or effectively monitored based on a single PAN/payment card. A single user often has multiple accounts and user activity is often distributed across the multiple accounts belonging to the user. A PAN-centric security threat detection process will have no, or limited, visibility across different accounts belonging to a same user, and therefore any transaction behaviour modelling techniques and/or scoring methods are restricted. That is, the network event pattern that characterises typical behaviour for the user is not well defined. Accordingly known security threat detection methods can often result in both false negatives (e.g. no security threat when there is a threat) and/or false positives (e.g. declining transactions when there is no threat).

The present invention aims to solve one or more of the problems mentioned above, and in particular may enable improved characterisation of typical user behaviour in terms of network events.

### SUMMARY OF THE INVENTION

In a first aspect of the invention there is provided a computer-implemented method for constructing an index structure in a real-time payment network, the method comprising: receiving a first set of transaction information, wherein the first set of transaction information comprises one or more data field entries relating to a user; creating a data record in the index structure for the user, the data record comprising a plurality of data fields for data field entries; inserting the one or more data field entries in the first set of transaction information into the data record; receiving a second set of transaction information, wherein the second set of transaction information comprises one or more data field entries; determining if the second set of transaction information is associated with the user, wherein at least one data field entry in the second set of transaction information is different to a corresponding data field entry in the first set of transaction information; and inserting the one or more data field entries in the second set of transaction information into the data record if the second set of transaction information is determined to be associated with the user.

The method may be performed at a first server, where the first server receives the sets of transaction information from one or more servers separate from the first server. Alternatively, the method may be performed by different systems or software entities all within a same server, where transaction information is received from entities within the same server.

In this way an index structure can be created which allows transactions relating to data records to be better searched in a real-time payment network. Creating a data record which includes multiple accounts that belong to a single user advantageously provides an index structure for transaction authorisation events and anomaly detection within the real-time payment network. When transaction information from a further transaction is determined to be associated with a user of an existing data record in the index structure, the data record can be updated to include the relevant data field entry information from the further transaction. This improves the consumer behaviour profile for a user of the payment network. The detection anomalies may be related data security risks or fraudulent activity in the network.

In order to avoid processing delays and unnecessary network traffic at payment networks when issuer fraud prevention rules are unnecessarily applied to payment card transactions, the present methods and systems leverage the intermediary nature of payment networks with index structure querying. As discussed above, payment networks avoid retaining PII that is associated with a PAN.

Preferably determining if the second set of transaction information is associated with the user comprises matching at least a portion of one data field entry in the second set of transaction information to a corresponding data field entry portion in the first set of transaction information.

Preferably the one or more data field entries includes one or more of: a name; an email address; a primary account number, PAN; mobile device information; account number; IP address; MAC address; billing address information; merchant identifier; transaction location; transaction amount; transaction date information; and time information, or other suitable field. It should be understood that this list of data field entries is not exhaustive and other relevant transaction information apparent to the skilled person may be included. As will be appreciated different payment and authorisation methods may utilise different transaction information, and therefore the applicable data field entry information will also vary accordingly.

Preferably matching further comprises calculating a likelihood score of the second set of transaction information being associated with the user, wherein the likelihood score being above a predetermined value indicates that the second set of transaction information is associated with the user, and wherein the likelihood score being below the predetermined value indicates that the second set of transaction information is not associated with the user.

Preferably the likelihood score is below the predetermined value if the billing address information in the second set of transaction information is the only data field entry which matches with the corresponding data field entry in the first set of transaction information. Preferably the likelihood score is above the predetermined value if at least two of: an IP address associated with a user device, a user address, a user email address or other such account identifier, and user device information (e.g. MAC address, device ID) match.. It is also possible for parameters relating to the transaction itself such as the transaction amount and/or transaction location to be used as a matching criterion. Preferably the likelihood score is further increased above the predetermined value if a time information of the second set of transaction information is within a predetermined time period of a time information of the first set of transaction information.

Preferably the method further comprises: linking a first primary account number, PAN, in the first set of transaction information with a second PAN in the second set of transaction information in the data record, wherein linking the first PAN and the second PAN indicate that the first and second PANs are associated to the user. In this way PANs that are linked together (i.e. associated to a same user) can be more effectively monitored and thus provide an enhanced fraud detection engine.

Preferably the method further comprises: receiving a risk score calculation request for a new transaction comprising a third set of transaction information; identifying a third PAN in the third set of transaction information; comparing the third PAN to the first and second PANs in the data record belonging to the user; calculating a risk score based on the comparison; setting the risk score for the new transaction; and transmitting the risk score for the new transaction to the issuer server.

In this way the method provides an improved issuer on-behalf service by calculating and setting a risk score for a new transaction against the data entry in the index structure. In addition the method provides a more accurate transaction approval mechanism. The index structure allows user account data to be more efficiently retrieved, without necessarily requiring an authorisation request to be passed on to an issuer.

Preferably the method further comprises: identifying one or more user accounts from the data record; monitoring the one or more user accounts for one or more further transactions to or from the one or more user accounts; identifying one or more additional user accounts from the one or more further transactions; determining if the one or more additional user accounts belong to the user; and inserting account information of the one or more additional user accounts which belong to the user into the data record.

Preferably the method further comprises: searching the index structure for the user; and outputting the data record of the user as a report.

In a second aspect there is provided a system for constructing an index structure in a real-time payment network, the system configured to: receive a first set of transaction information, wherein the first set of transaction information comprises one or more data field entries relating to a user; create a data record in the index structure for the user, the data record comprising a plurality of data fields for data field entries; insert the one or more data field entries in the first set of transaction information into the data record; receive a second set of transaction information, wherein the second set of transaction information comprises one or more data field entries; determine if the second set of transaction information is associated with the user, wherein at least one data field entry in the second set of transaction information is different to a corresponding data field entry in the first set of transaction information; and insert the one or more data field entries in the second set of transaction information into the data record if the second set of transaction information is determined to be associated with the user.

Preferably the system is further configured to perform the method of the first aspect of the invention.

Preferably the system comprises a first server configured to receive the sets of transaction information from one or more additional servers, wherein the first server is separate from the one or more additional servers. In this way the system is able to consolidate transaction information and create an index structure across different payment server networks which may or may not communicate with each other. The method of the first aspect of the invention may be performed at the first server, where the first server receives transaction information from servers separate from the first server. Alternatively, the method may be performed by different systems or software entities within a same server, where transaction information is received from entities within the same server.

According to a third aspect there is provided a non-transitory computer-readable storage medium storing instructions thereon which, when executed by a processor, cause the processor to perform a method for constructing an index structure in a real-time payment network, the method comprising: receiving a first set of transaction information, wherein the first set of transaction information comprises one or more data field entries relating to a user; creating a data record in the index structure for the user, the data record comprising a plurality of data fields for data field entries; inserting the one or more data field entries in the first set of transaction information into the data record; receiving a second set of transaction information, wherein the second set of transaction information comprises one or more data field entries; determining if the second set of transaction information is associated with the user, wherein at least one data field entry in the second set of transaction information is different to a corresponding data field entry in the first set of transaction information; and inserting the one or more data field entries in the second set of transaction information into the data record if the second set of transaction information is determined to be associated with the user.

### BRIEF DESCRIPTION OF THE DRAWINGS

Embodiments of the present invention are described below, by way of example only, with reference to the accompanying drawings, in which:
Figure 1 illustrates in schematic form a system according to the present invention;
Figure 2 is a flowchart illustrating a method for creating a data record in an index structure according to an embodiment;
Figure 3A is a flowchart illustrating a method for outputting a report according to an embodiment;
Figure 3B is a flowchart illustrating a method for calculating and setting a risk score for a transaction according to an embodiment;
Figure 4 is a flowchart illustrating a method for monitoring a user account and adding information to a data record according to an embodiment;
Figure 5 is a schematic diagram of an index structure system capable of implementing the invention and in accordance with an embodiment of the invention;
Figure 6 illustrates a table showing transaction information from multiple transactions according to a first service in the present disclosure;
Figure 7 illustrates in schematic form a real-time payment network according to a second service in the present disclosure;
Figure 8 illustrates another table showing different transaction information from multiple transactions according to the second service;
Figure 9 illustrates another table showing different transaction information from multiple transactions according a third service in the present disclosure; and
Figure 10 is an illustrative overview of the index structure system across different user devices and transaction authorisation services.

### DETAILED DESCRIPTION OF EMBODIMENTS

As used herein, the followings terms have the following meanings:
A 'network event' is any discrete operation that occurs over a network. An electronic message authorising transfer of funds from a source account to a destination account is an example of a network event. Typically, network events are made up of one or more electronic messages communicated over the network.
Network events have an origin and a destination. In the context of a payment network, typically the origin of a network event is a payment account from which a payment is to be made and the destination of a network event is a payment account that is to receive a payment. Network events may be referred to as 'transactions' in this specification.

A 'security threat', or equivalently 'network security threat', is an event within a network which leads, or has the potential to lead, to an unauthorised access, altering or movement of data within the network. It can also be considered as a modification to the operation of the network made against the interests of a legitimate network operator or even a consumer/user, where such a modification is made without the knowledge and permission of the network operator. In the example of a consumer transaction, an issuer may be liable for a fraudulent act, or even the merchant if they are the originator of the transaction. An example of a security threat in the context of a financial network is a redirection, where an electronic message specifying a false target account is transmitted over the network to cause movement of funds to an inappropriate target account in an attempt to commit fraud.

The methods and systems provided herein improve the implementation of fraud prevention rules by payment card issuers. In addition, the present methods and systems prevent fraud in cases where money is moved from account to account (where no payment card is used). Therefore by identifying the cards and accounts belonging to a same consumer fraud detection is improved across account-to-account (A2A) transactions as well as card transactions.

Payment networks may act as intermediaries between payment card issuers, which are typically associated with an issuer and merchant processing systems/banks. Payment networks receive transaction data from merchants (e.g., from a merchant point of sale system ("POS") and/or an acquirer bank associated with a merchant) and ensure that transactions associated with transaction data are appropriately processed and passed on to an issuer of a given payment card. Payment networks must therefore maintain data associated with each issuer, payment card account ("PAN") number, and acquirer/merchant. A payment network can be described as 'real-time' in the case where the processing of a payment transaction takes place 'online' or 'in real time'. That is, the transaction is processed completely (i.e. approved or declined) in real time. Here, real time is not intended to place any definitive time limit on the processing of a transaction, as in practice this will vary according to factors including network connection bandwidth, payment network processing resource and current load. By way of example only, a real-time payment network would typically handle the processing of a transaction in a timeframe of the order of a second, e.g. within 0.5 seconds to 5 seconds.

In order to avoid processing delays, unnecessary network traffic at payment networks when issuer fraud prevention rules are unnecessarily applied to payment card transactions, or identifying security threats to a real-time network the present disclosure describes an index structure having individual data entries corresponding to individual users of the network.

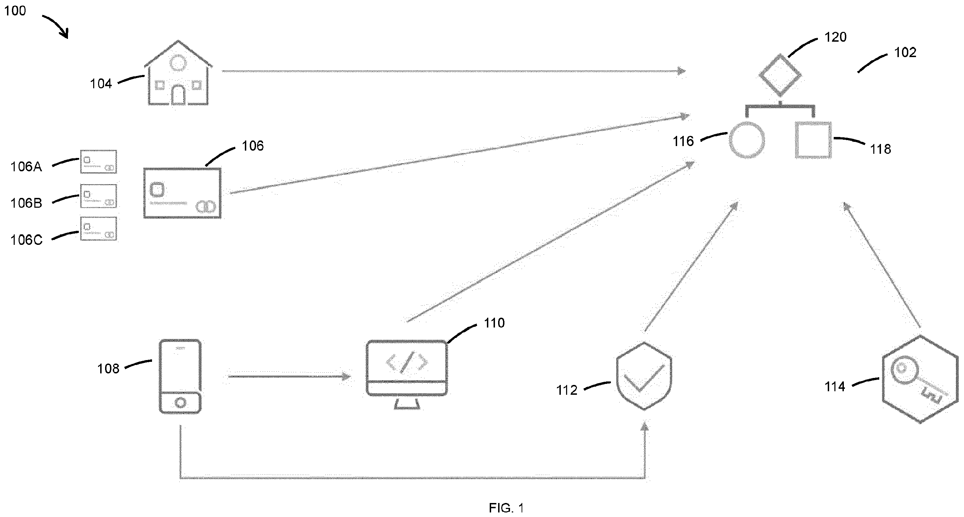

FIG.1 shows a schematic of a real-time payment network 100 comprising an index-constructing security server system 102 in communication with various transaction authorisation services. The various authorisation services include an address verification service (AVS) 104, a multiple payment card consolidation service 106 (such as the 'Curve' service provided by Curve OS Limited, a UK registered company, or other similar models) in which the PANs of multiple payment cards 106A, 106B, 106C are registered into a single card, a mobile payment system service 108 (such as 'PAYM' offered by Mobile Payments Service Company Limited, a UK registered company, or 'Swish^{®}' offered by Getswish AB, a Swedish registered company, in which users are identified by a mobile phone number instead of account details), a mobile payment system with a secure remote commerce service 110, a mobile payment system with a one-time password (OTP) service 112, and a digital token enablement service 114. Other authorisation services may also be implemented in the network 100, such as identity check messaging protocols (e.g. 3DS) or other card-not-present (CNP) transactions. It will be appreciated that embodiments need not implement all of the authorisation services shown in Fig. 1 , and that any combination of one or more of these authorisation services, or indeed alternative authorisation services, can instead be implemented.

When performing a transaction, a user may utilise any of the above authorisation services available at a merchant, where the transaction (comprising transaction data) is sent across the network 100 from the merchant to the security server system 102 via one of the available authorisation services. For example a user performs a transaction using a mobile payment system with an OTP service 112 at an online merchant, where the transaction is sent to the security server system 102 for authorisation and index structure construction.

The security server system 102 comprises a database 116, a data processing device 118 and security threat detection software 120, which operate to construct an index structure and identify security threats in the real-time payment network 100.

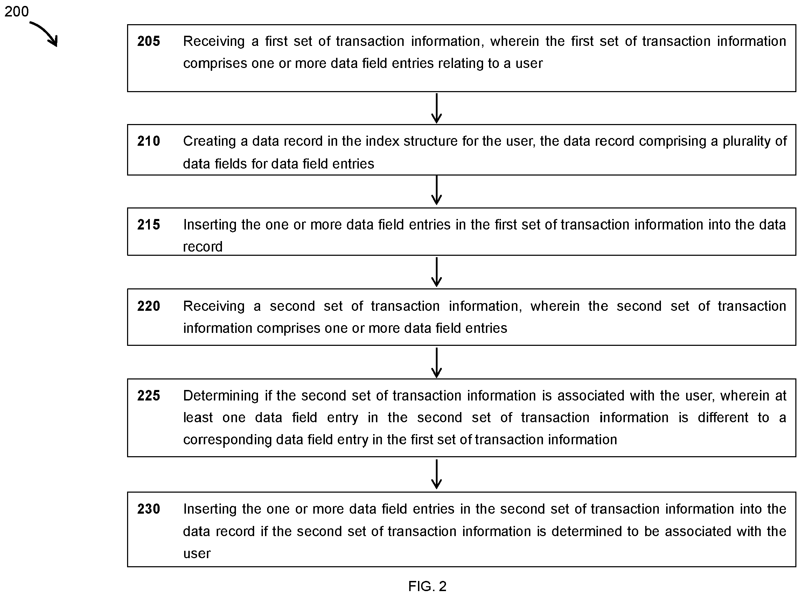

FIG. 2 sets out a method 200 for constructing a data entry and an index structure in a real-time payment network according to an embodiment. The method 200 can be performed by the security server system 102 of Figure 1.

In step 205 a transaction information for a first transaction is received at a first server, in this case the security server 102, from a second server which in this embodiment is a merchant server. The transaction was sent by the merchant server following a user providing user payment information in response to a payment request by the merchant server to the user. It should be understood that the user payment information is associated with the transaction authorisation service utilised by the user and merchant server, where relevant user payment information is stored in the first transaction as transaction information. In addition it should be appreciated that the transaction may be between two user accounts (e.g. paying a new payee, and using a PAYM with OTP service to set up the new payee), where in such a case the server sending transaction information would not be a merchant server.

In step 210 the system 102 (e.g. security server 102) creates a data record for the user in an index structure in the system database 116. The data record contains a plurality of data fields in which the transaction information (which includes the relevant user payment information) can be entered into as data field entries. For example the data fields may be for any combination of the following: a payment or primary account number (PAN), an account number, a name, an email address, billing address information, mobile device information, common device identifier, an IP address, MAC address, etc. of an electronic device the user used to initiate the transaction, a merchant identifier, recipient account information, transaction information, including a location, transaction amount, date and/or time information. Some or all of this information can be contained in a transaction message and referred to as transaction information. When a transaction message is processed by the invention, transaction information can be extracted from the transaction message and entered into the corresponding field(s). The data record may be labelled by an identification number for the user, and in step 215 the transaction information is added as one or more data field entries in the data record.

In step 220 the system 102 (e.g. security server 102) receives transaction information for a second transaction from a third server. The third server could be a merchant server that may or may not be the same merchant server as the first merchant server (of step 205). The security server system 102 in step 225 then determines if the user of the second transaction is the same as the user of the first transaction (and the same user of the data record created in step 210). The transaction information of the second transaction may be determined to be associated with the same user as the first transaction if the transaction information of one or more corresponding data fields between the first and second transactions match.

It will be appreciated that not all data fields will match, and indeed in some cases data fields can be present in the second transaction that are not present in the first transaction, or vice versa. It will also be appreciated that by matching common data fields the totality of information known about the user is increased because typically at least one data field entry in the second set of transaction information is different to a corresponding data field entry in the first set of transaction information.

In step 230 at least some of the transaction information of the second transaction is added to the data record if it is determined that the user of the first and second transactions are the same. If one of: different authorisation services (e.g. Address Verification Service (AVS) and PAYM, or AVS and Curve), different payment cards and/or different user accounts were used for the first and second transactions, the data record for the user is enhanced with the additional transaction information, in particular the user payment information of the second transaction. It should therefore be appreciated that the method 200 can construct data records and an index structure that contain both historic and live/real-time transaction data.

The data entry of method 200 thus provides a record across all identified user accounts and PANs belonging to a user, from which a transaction behaviour for the user can be better modelled and thus also provide an improved fraud detection, or security threat detection technique. This data entry may be continually updated or modified based on new information retrieved from the real-time network. This means that over time the information about the user that is known to system 102 grows and hence the user behaviours can be understood more accurately so as to better model what is 'normal' behaviour for a user. Additionally, a shift in user behaviour (e.g. the user moving residence, or changing workplace, etc.) can be detected and the 'normal' user transaction behaviour can be redefined correspondingly.

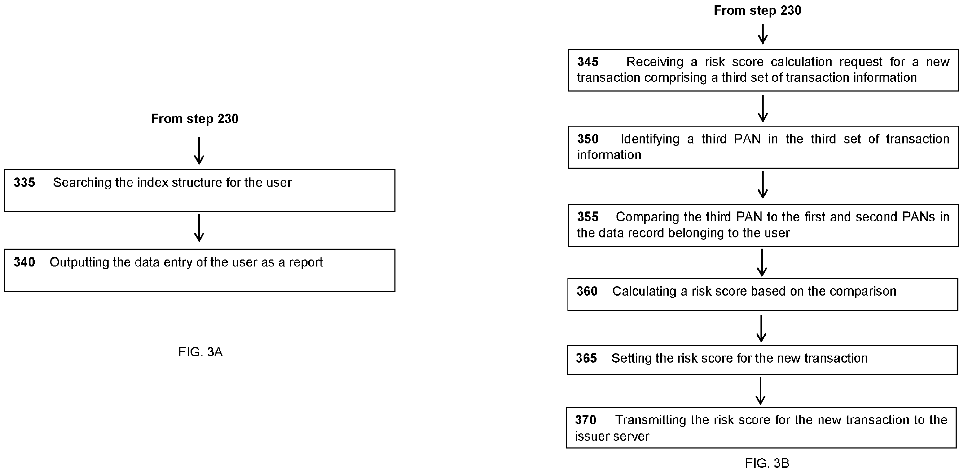

The method steps depicted in Fig. 3A follow step 230 from Fig. 2 and are performed by system 102 to search or query the index structure. In step 335 the index structure is searched/queried in order to find the data record for a particular user. The searching step may be performed by inputting a PAN, an account number / ID, a user ID, or a device identifier for example. The system will then search the index structure using the input data to identify the relevant data record.

This search request may be part of an authorisation request process, as will be explained in reference to Fig. 3B, or may be performed to output a report of the user data entry in step 340. This report provides information on the user's transaction behaviour, such as any one or more of transaction history, common expenditures, merchants and locations. The report combines all of the user's identified accounts into a single report in order to provide a more representative user transaction behaviour, and the information in the report may be used further to calculate a transaction score for current or future transactions.

The report can be in a human-readable format or a machine-readable format, e.g. provided as an API response to an API request.

Fig. 3B shows another querying process of the index structure, where an a risk score calculation request is received by the system in step 345. As explained above, the risk score calculation request may also be considered as a search request similar to step 335, where a data record for a user associated with the authorisation request for a new transaction is searched in the index structure database. Since the risk score calculation request in step 345 is associated with a new (third) transaction, the transaction data in the request may be used to identify one of the user's accounts in order to locate the relevant data entry in step 350. For example, the transaction data may include a PAN or an account ID. In an example, the user may be transferring funds between two accounts both belonging to the user. This means that two user accounts will be identified in step 350.

In step 355 the transaction information in the new transaction is compared against the stored information in the data record relating to the identified user. For example the merchant or recipient in the new transaction may be compared with historical transaction records the data entry to determine whether the merchant/recipient is a known or trusted merchant/recipient by the user. In another example the transaction amount or location may be compared against other amounts or locations of recent transactions performed by the user.

The system then calculates a risk score (or transaction score) based on the comparison in step 360, and then sets the risk score for the new transaction in step 365. The system transmits the risk score onto the issuer server in step 370. The risk score calculation may be an optional feature that can be selected or deselected in the system, and all new transactions could be transmitted to an issuer server via the system. In either case the system can provide a risk score, or transaction score, based on the comparison between the information in the new transaction and stored information in the user data record. The transaction score can quantify the risk associated with the transaction and help the appropriate authority (e.g. the issuer) to decide whether to authorise or decline the transaction.

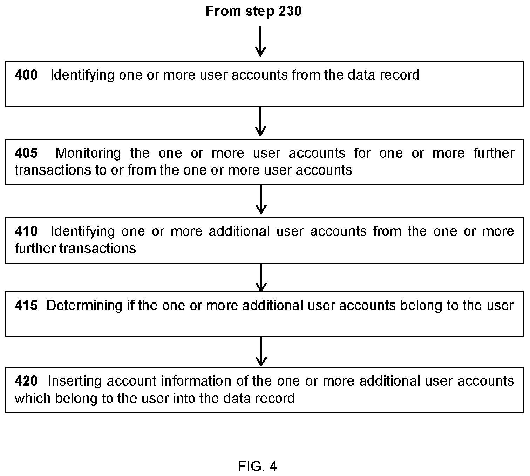

Fig. 4 show method steps for the system 102 to build up over time a complete picture of all accounts associated with a given user.

In step 400 system 102 identifies one or more user accounts in a data record. In step 405, system 102 monitors incoming and outgoing transactions from the identified accounts.

In step 410 one or more additional user accounts are identified from the incoming and outgoing transactions, and in step 415 the system 102 determines if the newly identified user account(s) belong to the user. This determination can be made by examining information associated with the newly identified user account(s) such as name, address, date of birth, social security number, etc. and comparing this information to corresponding information associated with the one or more user accounts in the data record. Where a match is identified, system 102 can be confident that the newly identified user account(s) do indeed relate to the same user as the one or more accounts in the data record. Partial matching may be used, e.g. if a name and date of birth match but address does not, this can be deemed a sufficient match to consider the accounts to be associated with the same user. As another example, a first name and address may match, but a surname does not - again, this can be deemed a sufficient match to consider the accounts to be associated with the same user.

In step 420 account information of the additional user accounts that are determined to belong to the user is added to the data record in the index structure. Over time, a complete picture is built up of the accounts associated with the user. Additionally, the more information that is added, the more additional user accounts are likely to be identified.

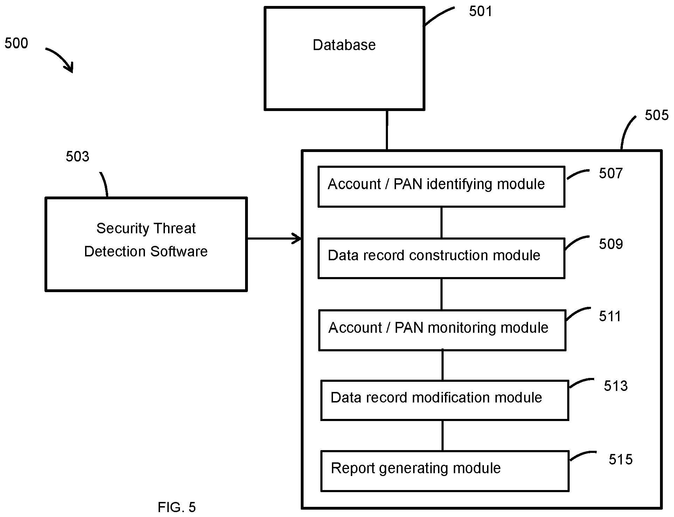

Figure 5 is a schematic diagram of a system 500 capable of implementing the invention and in accordance with an embodiment of the invention. The system 500 may be implemented as a part of the security server system 102 in the real-time network 100 in Figure 1.

The system 500 comprises data processing device 505 which includes a number of modules. These include account and/or PAN identifying module 507, data record construction module 509, account / PAN monitoring module 511 and data record modification module 513. Each of the modules may communicate with one another. Device 505 also includes a report generating module 515. Here, 'module' is used to denote a specific set of functions and it will thus be appreciated that a practical implementation of any particular module can take many forms, e.g. hardware modules, software modules or services.

Data processing device 505 itself can be a single computer, a set of networked computers or some other distributed processing architecture. One or more virtual machines may be provided to implement the functionality of data processing device 505. Other suitable forms for data processing device 505 will be apparent to the skilled person having the benefit of the present disclosure.

Security threat detection software 503 includes computer-readable code stored on a computer-readable medium that causes data processing device 505 to perform the methods as described in relation to Figures 2 to 4 when executed. Security threat detection software 503 may be executed by device 505. Each of the modules 507 to 515 may be responsible for executing a specific portion of the code.

Account and/or PAN identifying module 507 is responsible for obtaining account and PAN data associated with a transaction or network event. Account/PAN identifying module 507 can also identify network events that comprise PAN or account data associated with a network security threat. For example any accounts that are known to pose a network threat may be identified by module 507.

Data record construction module 509 is responsible for creating a data record in the index structure. A constructed data record may be stored in a system database 501.

Account / PAN monitoring module 511 is responsible for monitoring selected and/or identified accounts and/or PANs in a real-time network. This may involve monitoring an account for transactions to and from the account, or in another example may monitor a PAN to determine accounts related to the PAN.

Data record modification module 513 is responsible for modifying and/or updating a data entry using new transaction or account data that may be included to the data record.

Report generating module 515 is responsible for outputting a report comprising details of an identified / selected user data record in the index structure. Report generating module 515 may also output a report associated with the security threat in the network.

Each of modules 507 and 511 may be considered as a network-event detecting module. A network detecting module may operate by detecting network events such as transactions, or change requests or updates. Data record construction module 509 and data record modification module 513 are responsible for determining how data should be entered to the index structure.

Data associated with the data records and the index structure is stored in database 501. In some arrangements the data of the data records and the index structure may be stored in more than one database 501. For instance, each data record may have its own database 501. The data from the data records may be stored in the database 501 by any means that is known. The creation, addition or modification of a data record may also comprise data having a certain value and a time stamp associated with the data record action.

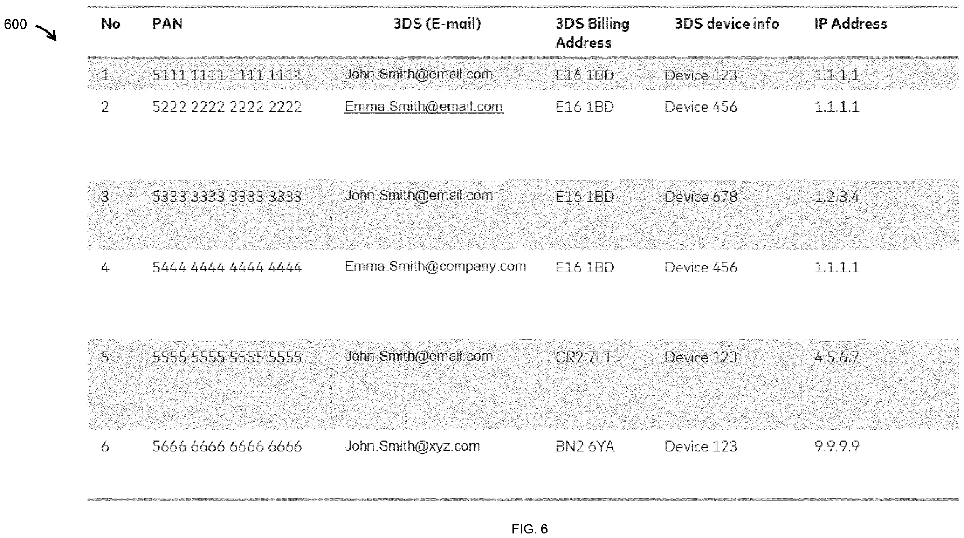

Fig. 6 shows a table 600 of transaction information relating to a number of transactions received by the security server system 102 of Figure 1 from an identity check authorisation service. The table 600 shows six exemplary transactions, but it should be understood that any number of transactions can be received and processed by the security server system 102.

The information taken from a transaction shown in each row in Figure 6 is transaction data which is used to determine whether a particular transaction is associated with a user. These include, but depending on the authorisation service are not limited to, a PAN, an email address, a billing address, device identifiers associated with electronic device(s) used to conduct the transaction, and an IP address. This list is not exhaustive and other information may additionally or alternatively be received.

In the first transaction, the following information is received:
PAN: 5111 1111 1111 1111
Email address: john.smith@email.com
Billing address: E16 1BD
Device identifier: Device 123
IP address: 1.1.1.1

In the second transaction, the following information is received:
PAN: 5222 2222 2222 2222
Email address: emma.smith@email.com
Billing address: E16 1BD
Device identifier: Device 456
IP address: 1.1.1.1

As can be seen between the first and second transactions, the billing address and IP address both match, which indicate that the user may be the same and that the two PANs are linked. However, other parameters such as the email address and device identifier indicate that PANs 5111 1111 1111 1111 and 5222 2222 2222 2222 are not linked. Therefore the system 102 may determine that the consumers of the first and second transactions live at the same address and are connecting via a same router, but are not the same user.

In the third transaction, the following information is received:
PAN: 5333 3333 3333 3333
Email address: john.smith@email.com
Billing address: E16 1BD
Device identifier: Device 678
IP address: 1.2.3.4

The email address and billing address in the third transaction are the same as those in the first transaction. However the PAN, device identifier and IP address of the third transaction are different from the corresponding parameters in the first transaction. From the given transaction information, the system 102 determines that PANs 5111 1111 1111 1111 and 5333 3333 3333 3333 are linked and associated with the same user. In this case it is determined that the same consumer/user performs two different transactions with two different devices from two different locations (i.e. IP address). The system 102 thus assigns different weightings to the different parameters in the transaction information of a transaction when determining whether transactions are associated with a same user.

In the fourth transaction, the following information is received:
PAN: 5444 4444 4444 4444
Email address: emma.smith@company.com
Billing address: E16 1BD
Device identifier: Device 456
IP address: 1.1.1.1

In the fourth transaction the billing address, device identifier and IP address are the same as those in the second transaction. However the PAN and email address of the fourth transaction are different from the corresponding parameters in the second transaction. From the given transaction information, the system 102 determines that PANs 5222 2222 2222 2222 and 5444 4444 4444 4444 are linked and associated with the same user. In this case it is determined that the same consumer/user performs two different transactions with a same device from a same location/IP address. It can be seen that the system 102 is able to increase the likelihood of determining linked PANs (being associated with a same user) based on a collection of matched parameters. In other words the system can utilise a cumulative confidence from multiple parameters in transaction information in order to determine a same user. The system can also evolve the confidence and probability over time as more transactions are analysed.

In the fifth transaction, the following information is received:
PAN: 5555 5555 5555 5555
Email address: john.smith@email.com
Billing address: CR2 7LT
Device identifier: Device 123
IP address: 4.5.6.7

In the fifth transaction the email address and device identifier are the same as those in the first transaction. However the PAN, billing address, and IP address in the fifth transaction are different from the corresponding parameters in the first transaction. In addition, the email address in the fifth transaction is the same as the email address in the third transaction. From the given transaction information, the system 102 determines that PANs 5111 1111 1111 1111, 5333 3333 3333 3333 and 5555 5555 5555 5555 are linked and associated with the same user. In this case it is determined that the same user performs different transactions with a same device (between the first and fifth transactions) from different locations/IP addresses. It can be seen that only one parameter is matched between the third and fifth transactions. However the system 102 is uses multiple transactions (i.e. the first, third and fifth transactions) to perform the determination. It should therefore be understood that a data record in the index structure provides a growing picture of a user and their transaction behaviour and history.

In the sixth transaction, the following information is received:
PAN: 5666 6666 6666 6666
Email address: john.smith@xyz.com
Billing address: BN2 6YA
Device identifier: Device 123
IP address: 9.9.9.9

In the sixth transaction the only previously seen parameter is the device identifier, which is the same device identifier as that in the first and fifth transactions. The PAN, email address, billing address, and IP address in the sixth transaction are different from the other transactions.

The system 102 determines that it is likely that PANs 5111 1111 1111 1111, 5555 5555 5555 5555 and 5666 6666 6666 6666 are linked and associated with the same user since the device identifier is the same. Accordingly the system would also determine that PAN 5333 3333 3333 3333 is also linked with the above three PANs.

By storing and collecting transaction data across multiple PANs and accounts belonging to a same user, a more complete picture of a user's spending habits can be established. This can then be used in fraud detection by building a fraud profile for a user. As an example, a user may typically use a same card to purchase high-value goods from a merchant. If the user switches to using another card for one of these high-value purchases it can be determined that the transaction is not fraudulent because it is aligned with the recorded user behaviour across the user's cards. Without linking the PANs together, such change in behaviour would most likely result in the transaction being declined because the use the first occurrence of the high value transaction at a new merchant for that PAN would be deemed as possible fraud.

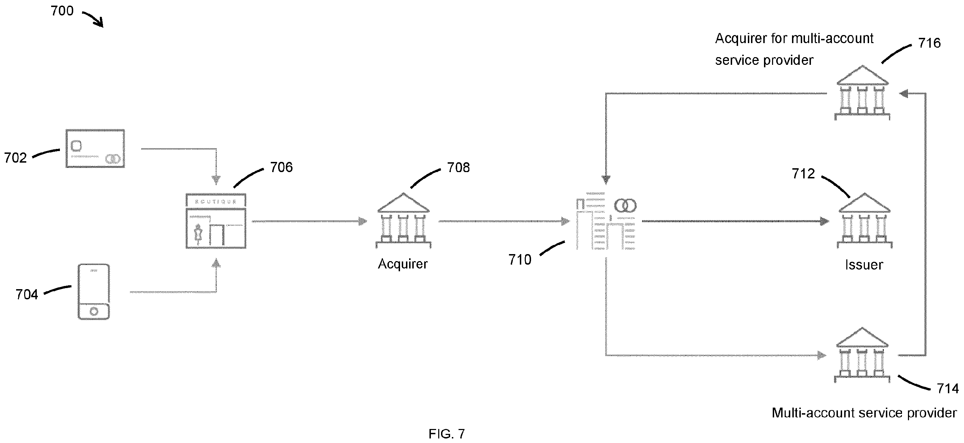

Fig. 7 shows a schematic illustration of payment network 700 for a multiple payment card consolidation service 106 (such as Curve or other similar models). The network 700 comprises a multi-account payment card 702 and a multi-account app on a smartphone 704. Each of the multi-account functions in the payment card 702 and the smartphone 704 allow a user to select which account and/or PAN from multiple accounts/PANs belonging to the user to provide to a merchant 706 when making a payment. However multi-account payment card 702 and the multi-account app in the smartphone 704 provide a same PAN to the merchant 706 regardless of which user account or PAN is selected. This PAN may also be a funding PAN (FPAN) of a token which would be detokenized at a later stage. The incoming PAN should be typically looked at after detokenization (for the system to register the FPAN).

This particular PAN or FPAN associated with the payment card 702 or smartphone 704 is sent from the merchant 706 to the merchant's acquirer 708 along with further transaction information, including transaction amount, location, merchant identifier, etc. The merchant's acquirer 708 then sends the transaction information along with a transaction authorisation request to a payment network server 710. The security server system 102 of Figure 1 may be implemented in the payment network server 710. The payment network server 710 may authorise the transaction authorisation request in an issuer-on-behalf server, or may forward the authorisation request onto the issuer bank server 712 with a specific user account PAN as will be explained below.

In order to further process this transaction, the payment network server 710 sends the PAN to the multi-account service provider 714 (e.g. a Curve server), which in turn determines the account selected by the user for payment in the payment card 702 or smartphone app 704 and sends the specific user account PAN to the multi-account service provider's acquirer 716. This specific user account PAN relates to a specific bank account and/or PAN belonging to the user.

The multi-account service provider's acquirer 716 then sends the specific user account PAN to the payment network server 710 which in turn sends the PAN on to the issuer bank server 712. It should be understood that this transmission of the specific user account PAN to the issuer bank server 712 may or may not include a transaction authorisation request, depending on whether the payment network server 710 authorised the transaction on behalf of the issuer bank.

This process is known as a back-to-back funding mechanism, in which the payment network server 710 receives two PANs sequentially, or back-to-back: the first PAN in the transaction information from the merchant's acquirer 708 and the second PAN which is the specific user account PAN in the transaction information from the multi-account service provider's acquirer 716.

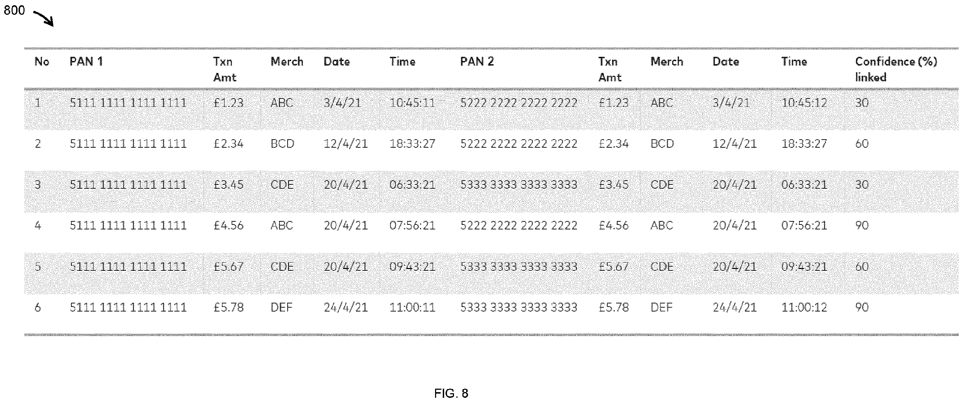

Therefore the payment network server 710, and the security server system implemented within, can monitor the incoming transactions (i.e. the back-to-back messages from the merchant's acquirer 708 and the multi-account service provider's acquirer 716) and match the transactions from the merchant's acquirer 708 and the multi-account service provider's acquirer 716. In this way the two PANs, i.e. either the payment card 702 PAN or the smartphone app 704 PAN can be linked with the specific user account PAN. It should be further understood that since the multiple accounts and/or PANs can be registered in the payment card 702 or smartphone app 704, this matching process allows the security server system to identify multiple PANs and payment sources that are linked together, as will be further explained with reference to Figure 8 below.

Fig. 8 shows a table 800 of transaction information relating to a number of transactions received by the security server system 102 of Figure 1 from a multiple payment card consolidation service 106. The table 800 shows six exemplary back-to-back transaction pairs, but it should be understood that any number of transactions can be received and processed by the security server system 102.

The information taken from the transaction pairs shown in each row in Figure 8 is transaction data from two sequential transactions (back-to-back) which is used to determine whether two PANs are linked and associated with a same user. It should be understood that the transaction pairs are not received at the security server system as a pair, rather the two transactions have been placed in a same row in table 800 for illustrative purposes.

In the first row in table 800, the first transaction in the first pair shows transaction information including a first PAN of the payment card, a transaction amount, a merchant identifier, a date and a timestamp. In the second transaction in the first pair, there is a second PAN (the specific user account PAN), a transaction amount, a merchant identifier, a date and timestamp. This transaction information shown is not an exhaustive list and other information may additionally or alternatively be received.

By comparing the two transactions in the first row (or first transaction pair) in table 800, it is seen that the transaction amount, the merchant identifier and date are the same between the two transactions. The PAN and the timestamp are different. From this transaction information, the system may determine that the PANs 5111 1111 1111 1111 and 5222 2222 2222 2222 are linked and assign a degree of confidence to the link, in this case 30%. Since the time difference between the timestamps of the transactions is one second, the system may increase the confidence of the link between the PANs based on the time difference falling within a predetermined time period. Conversely if the time difference between the timestamps of two transactions is greater than a predetermined time period (for example three seconds) the system may determine that the PANs of two transactions having other matching parameters are not linked. This is based on the understanding that typically a multi-account service provider initiates a transaction in the manner described in connection with Fig. 7 almost immediately after receiving the user-initiated transaction, hence a time between these two transactions is expected to be short (about 1 second; less than 3 seconds, for example).

The degree of confidence in linking two PANs can increase cumulatively as the number of transactions involving previously received PANs increase. This is seen in the second row of back-to-back transactions in table 800, where the two PANs received by the system were previously received by the system in the first transaction pair. In this second transaction pair the transaction amount, merchant identifier, date and timestamp are identical. Therefore the system determines that the PANs 5111 1111 1111 1111 and 5222 2222 2222 2222 are linked, and assigns a higher degree of confidence (60%) based on the previous transaction information received.

In the third transaction pair in table 800, a new PAN 5333 3333 3333 3333 is received by the system. The transaction amount, merchant identifier, date and timestamp are the same between the two transactions in this third back-to-back transaction pair. However since this is the first instance that PAN 5333 3333 3333 3333 is received by the system, a lower degree of confidence (30%) is assigned when linking PAN 5111 1111 1111 1111 and PAN 5333 3333 3333 3333.

PANs 5111 1111 1111 1111 and 5222 2222 2222 2222 are again received in the fourth back-to-back transaction pair, and the transaction amount, merchant identifier, date and timestamp between the first and second transactions in the fourth transaction pair are the same. Since this is the third instance of PANs 5111 1111 1111 1111 and 5222 2222 2222 2222 being received by the system, the degree of confidence of the two PANs being linked is further increased to 90%.

The fifth back-to-back transaction pair is similar to the third transaction pair, in which the only difference in the transaction information is PAN 5111 1111 1111 1111 and PAN 5333 3333 3333 3333. Therefore the system determines that the PANs 5111 1111 1111 1111 and 5333 3333 3333 3333 are linked, and assigns a higher degree of confidence (60%) based on the previous transaction information (in the third transaction pair) received.

PANs 5111 1111 1111 1111 and 5333 3333 3333 3333 are again received in the sixth back-to-back transaction pair, and the transaction amount, merchant identifier, date and timestamp between the first and second transactions in the sixth transaction pair are the same. Since this is the third instance of PANs 5111 1111 1111 1111 and 5333 3333 3333 3333 being received by the system, the degree of confidence of the two PANs being linked is further increased to 90%.

As the system monitors transactions coming in on certain account ranges, and try to match them to transactions from transactions coming in from multi-account service provider's acquirer 716, a picture is built up of payment account numbers that are linked together. In this example, within these six transaction pairs, the system reaches a high degree of certainty that 5222 2222 2222 2222 is linked to the payment card having PAN 5111 1111 1111 1111, and that 5333 3333 3333 3333 is linked to the same card, therefore 5222 2222 2222 2222 and 5333 3333 3333 3333 must also belong to the same user.

The present system may be configured to receive every interaction (not only authorisation requests) in order to build up a picture of which cards, PANs and/or user accounts are linked, for example:
- Refunds (since if a consumer wishes to change their payment mechanism after the fact, then the original card is refunded, and the refund amount debited from the second card)
- Clearing
- Disputes

In this way the system performs intelligent monitoring to establish which cards are linked together, and combine this with data from other sources to provide enhanced fraud monitoring.

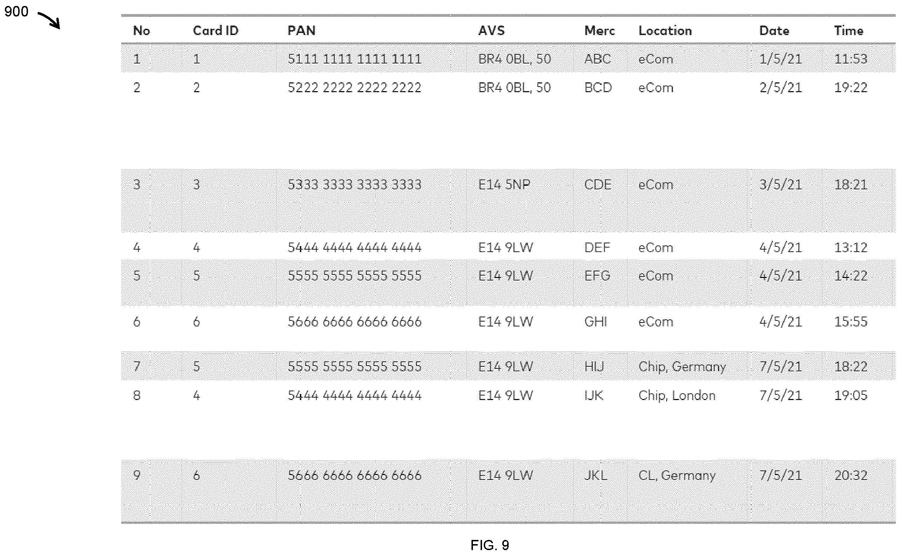

Fig. 9 shows a table 900 of transaction information relating to a number of transactions received by the security server system 102 of Figure 1 from an address verification service 104. The table 900 shows nine exemplary transactions pairs, but it should be understood that any number of transactions can be received and processed by the security server system 102.

The information taken from a transaction shown in each row in Figure 9 is transaction data which is used to determine whether a particular transaction is associated with a user. These include, but depending on the authorisation service are not limited to, a card identifier, a PAN, an address verification service parameter, a merchant identifier, a transaction location, a date, and time. This list is not exhaustive and other information may additionally or alternatively be received.

In the first transaction, the following information is received:
Card identifier: 1
PAN: 5111 1111 1111 1111
AVS parameter: BR4 0BL, 50
Merchant identifier: ABC
Location: eCom
Date: 1/5/21
Time: 11:53

In the second transaction, the following information is received:
Card identifier: 2
PAN: 5222 2222 2222 2222
AVS parameter: BR4 0BL, 50
Merchant identifier: BCD
Location: eCom
Date: 2/5/21
Time: 19:22

The address verification service parameter, BR4 0BL, 50, is the same in both the first and second transactions, which indicates that the user may be the same and that the two PANs are linked. However, other parameters including the card identifier, PAN, merchant identifier and date and time information are not the same. From the transaction information provided in the address verification service, the system determines that there is a reasonable likelihood that card identifier 1 and card identifier 2 from the two transactions are linked based on the AVS parameter indicating a same dwelling. However there is no indication as to whether the two cards are linked to a same consumer/user. The AVS parameter may be shared in a house share with multiple occupants, or spouses, or other family members.

In the third transaction, the following information is received:
Card identifier: 3
PAN: 5333 3333 3333 3333
AVS parameter: E14 5NP
Merchant identifier: CDE
Location: eCom
Date: 3/5/21
Time: 18:21

In this third exemplary transaction, the system recognises that the address in the AVS parameter is a business address, with multiple, even thousands, of corporate cards registered to the same address. As such the system does not link the PANs to any other PANs or user accounts / data records.

In the fourth transaction, the following information is received:
Card identifier: 4
PAN: 5444 4444 4444 4444
AVS parameter: E14 9LW
Merchant identifier: DEF
Location: eCom
Date: 4/5/21
Time: 13:12

In the fifth transaction, the following information is received:
Card identifier: 5
PAN: 5555 5555 5555 5555
AVS parameter: E14 9LW
Merchant identifier: EFG
Location: eCom
Date: 4/5/21
Time: 14:22

In the sixth transaction, the following information is received:
Card identifier: 6
PAN: 5666 6666 6666 6666
AVS parameter: E14 9LW
Merchant identifier: GHI
Location: eCom
Date: 4/5/21
Time: 15:55

In these three transactions (fourth, fifth and sixth), the postcode is not attributed to a house or flat number, and the system recognises that the AVS parameter is a postcode that could be one property in over a hundred properties. Therefore the system does not match any of the PANs in the three transactions without further transaction information (e.g. from historical transaction information in an existing data record, or from other transaction information from other authorisation services). However the security server system stores the address data (AVS parameter) and PAN data, each time an AVS transaction occurs. This stored data may be used to determine a user or linked PAN for a future transaction, as is explained with reference to the following transactions.

In the seventh transaction, the following information is received:
Card identifier: 5
PAN: 5555 5555 5555 5555
AVS parameter: E14 9LW
Merchant identifier: HIJ
Location: Chip, Germany
Date: 7/5/21
Time: 18:22

In the eighth transaction, the following information is received:
Card identifier: 4
PAN: 5444 4444 4444 4444
AVS parameter: E14 9LW
Merchant identifier: IJK
Location: Chip, London
Date: 7/5/21
Time: 19:05

In the ninth transaction, the following information is received:
Card identifier: 6
PAN: 5666 6666 6666 6666
AVS parameter: E14 9LW
Merchant identifier: JKL
Location: CL, Germany
Date: 7/5/21
Time: 20:32

The PANs and AVS parameter in the seventh, eighth and ninth exemplary transactions in table 900 is the same PANs as those shown in the fifth, fourth and sixth transactions respectively.

However, the transaction locations (i.e. Germany and London) in the seventh and eighth transactions are in different countries, despite the transaction time being less than an hour apart. The system thus determines that card identifier 4 and card identifier 5 are not linked, since the seventh and eighth transactions are made in different countries at similar time.

The ninth transaction also has a transaction location in Germany, and thus the AVS parameter and transaction location between the seventh and ninth locations indicate that card identifier 5 and card identifier 6 may be linked.

Therefore it can be seen that every single transaction is checked against a database in the security server system after the initial store of AVS data, and additional logic should be applied to see if the PANs can be matched together. For example, if an address is shared, or a postcode is shared, then one PAN detected as 'travelling' (i.e. performing a card present transaction in a location remote from the normal location of card present transactions involving the PAN) whilst another PAN is not detected as travelling would be an indicator that the PANs are not linked.

It should be understood that the security server system maintains a database of records for users across different authorisation services, including the address verification service and multiple payment card consolidation service described above. As such, over time a better picture of a user's transaction behaviour is built up and through transaction history and patterns the system can establish which cards and PANs belong to a same user/consumer.

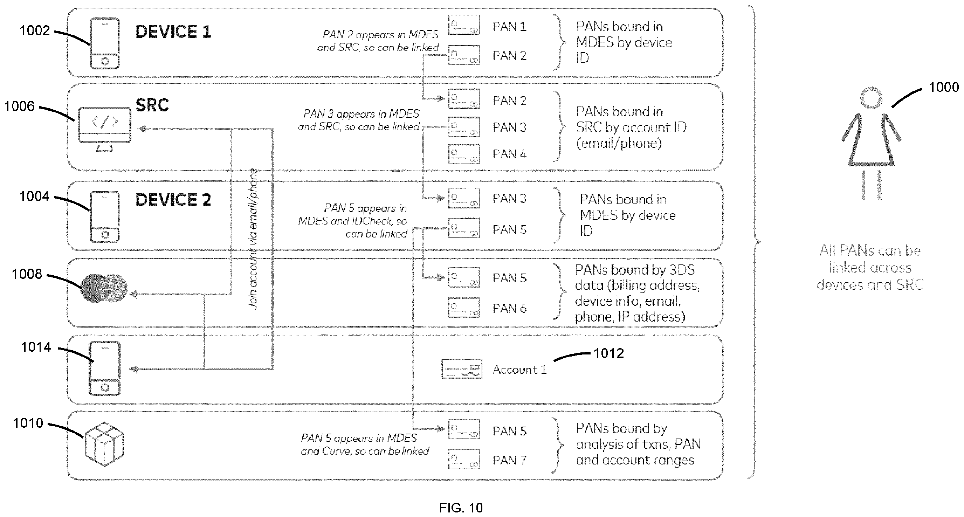

Figure 10 shows an exemplary schematic of a single user 1000 using seven different PANs (belonging to the user 1000) across different user devices and transaction authorisation services.

A first device 1002 and a second device 1004 each have two PANs, PAN 1, PAN 2, and PAN 3, PAN 5 respectively, bound within the first device 1002 and second device 1004. The user 1000 also uses a further three PANs, PAN 2, PAN 3 and PAN 4, within a user account in a secure remote commerce system 1006.

As PAN 2 is registered in both the first device 1002 and the secure remote commerce system 1006, the security server system determines that the PANs in the first device 1002 and the secure remote commerce system 1006 are linked via PAN 2. Similarly the security server system links the PANs in the secure remote commerce system 1006 and the second device 1004 based on PAN 3 being registered in both. As an example it can therefore be seen that the security server system is able to link PAN 1 (which is only registered in the first device 1002) to PAN 2, PAN 3, PAN 4, and PAN 5 in this way.

The user 1000 uses PAN 5 and PAN 6 in an identity check messaging protocol service 1008 (such as 3DS) and PAN 5 and PAN 7 are registered in a multiple account payment card service 1010 (such as Curve). As PAN 5 is registered in the second device 1004, the identity check messaging protocol service 1008 and the multiple account payment card service 1010 the security server determines that PAN 3, PAN 5, PAN 6 and PAN 7 are associated with a same user 1000. Similar to PAN 1, the two PANs, PAN 6 and PAN 7, are each registered in only one single authorisation service 1008 and 1010, and the security server system can link PAN 6 and PAN 7 to other PANs and accounts belonging to the user 1000.

The user 1000 also registers a user bank account 1012 in a mobile payment system service 1014 (such as PAYM) which links the mobile payment device to the secure remote commerce system 1006 and the identity check messaging protocol service 1008. In this way the two authorisation services 1006 and 1008 are linked to a same mobile payment device, so that the security server system may thus determine that PAN 2, PAN 3, PAN 4, PAN 5 and PAN 6 are linked.

It will be appreciated that any of the methods described herein, and any particular step of said methods, can be implemented by a computer. Such implementation may take the form of a processor executing instructions stored on a computer-readable medium or media, e.g. non-transitory medium/media, wherein when executed the instructions cause the processor to perform any one or more steps of any of the methods described herein. Individual steps of a method may be implemented by different processors that are all collectively acting in accordance with computer-readable instructions stored on one or more storage media. The processor or processors may be component(s) of system 500, for example a processor of device 505.

It will be appreciated that the embodiments described herein are purely illustrative and hence are susceptible to many modifications, substitutions, additions and the like. All such modifications, substitutions and additions are within the scope of the invention which is defined by the appended claims. Method steps described in this specification may be implemented in any order, in parallel or sequentially, unless specifically stated otherwise.

## Claims

1. A computer-implemented method for constructing an index structure in a real-time payment network, the method comprising:
receiving a first set of transaction information, wherein the first set of transaction information comprises one or more data field entries relating to a user;
creating a data record in the index structure for the user, the data record comprising a plurality of data fields for data field entries;
inserting the one or more data field entries in the first set of transaction information into the data record;
receiving a second set of transaction information, wherein the second set of transaction information comprises one or more data field entries;
determining if the second set of transaction information is associated with the user, wherein at least one data field entry in the second set of transaction information is different to a corresponding data field entry in the first set of transaction information; and
inserting the one or more data field entries in the second set of transaction information into the data record if the second set of transaction information is determined to be associated with the user.

2. The method of claim 1, wherein determining if the second set of transaction information is associated with the user comprises matching at least a portion of one data field entry in the second set of transaction information to a corresponding data field entry portion in the first set of transaction information.

3. The method of claims 1 or 2, wherein the one or more data field entries includes one or more of: a name; an email address; a primary account number, PAN; mobile device information; account number; IP address; MAC address; billing address information; merchant identifier; transaction location; transaction amount; transaction date information; and time information, or other suitable field.

4. The method of claims 2 or 3, wherein matching further comprises calculating a likelihood score of the second set of transaction information being associated with the user, wherein the likelihood score being above a predetermined value indicates that the second set of transaction information is associated with the user, and wherein the likelihood score being below the predetermined value indicates that the second set of transaction information is not associated with the user.

5. The method of claim 4, wherein the likelihood score is below the predetermined value if the billing address information in the second set of transaction information is the only data field entry which matches with the corresponding data field entry in the first set of transaction information.

6. The method of claims 4 or 5, wherein the likelihood score is above the predetermined value if at least two of: an IP address associated with a user device, a user address, a user account identifier, and user device information match.

7. The method of claim 6, wherein the likelihood score is further increased above the predetermined value if a time information of the second set of transaction information is within a predetermined time period of a time information of the first set of transaction information.

8. The method of any of the preceding claims further comprising:
linking a first primary account number, PAN, in the first set of transaction information with a second PAN in the second set of transaction information in the data record, wherein linking the first PAN and the second PAN indicate that the first and second PANs are associated to the user.

9. The method of claim 8 further comprising:
receiving a risk score calculation request for a new transaction comprising a third set of transaction information;
identifying a third PAN in the third set of transaction information;
comparing the third PAN to the first and second PANs in the data record belonging to the user;
calculating a risk score based on the comparison;
setting the risk score for the new transaction; and
transmitting the risk score for the new transaction to the issuer server.

10. The method of any of the preceding claims further comprising:
identifying one or more user accounts from the data record;
monitoring the one or more user accounts for one or more further transactions to or from the one or more user accounts;
identifying one or more additional user accounts from the one or more further transactions;
determining if the one or more additional user accounts belong to the user; and
inserting account information of the one or more additional user accounts which belong to the user into the data record.

11. The method of any of the preceding claims further comprising:
searching the index structure for the user; and
outputting the data record of the user as a report.

12. A system for constructing an index structure in a real-time payment network, the system configured to:
receive a first set of transaction information, wherein the first set of transaction information comprises one or more data field entries relating to a user;
create a data record in the index structure for the user, the data record comprising a plurality of data fields for data field entries;
insert the one or more data field entries in the first set of transaction information into the data record;
receive a second set of transaction information, wherein the second set of transaction information comprises one or more data field entries;
determine if the second set of transaction information is associated with the user, wherein at least one data field entry in the second set of transaction information is different to a corresponding data field entry in the first set of transaction information; and
insert the one or more data field entries in the second set of transaction information into the data record if the second set of transaction information is determined to be associated with the user.

13. The system of claim 12 further configured to perform the method of any of claims 2 to 11.

14. The system of claims 12 or 13, wherein the system comprises a first server configured to receive the sets of transaction information from one or more additional servers, wherein the first server is separate from the one or more additional servers.

15. A non-transitory computer-readable storage medium storing instructions thereon which, when executed by a processor, cause the processor to perform a method for constructing an index structure in a real-time payment network, the method comprising:
receiving a first set of transaction information, wherein the first set of transaction information comprises one or more data field entries relating to a user;
creating a data record in the index structure for the user, the data record comprising a plurality of data fields for data field entries;
inserting the one or more data field entries in the first set of transaction information into the data record;
receiving a second set of transaction information, wherein the second set of transaction information comprises one or more data field entries;
determining if the second set of transaction information is associated with the user, wherein at least one data field entry in the second set of transaction information is different to a corresponding data field entry in the first set of transaction information; and
inserting the one or more data field entries in the second set of transaction information into the data record if the second set of transaction information is determined to be associated with the user.
